# EUROPÄISCHE PATENTANMELDUNG

(11) **EP 4 572 105 A1**
(43) Veröffentlichungstag der Anmeldung: **18.06.2025**
(21) Anmeldenummer: 23216636.3
(22) Anmeldetag: 14.12.2023
(51) Int. Cl.: H02K 7/04, H02K 9/06, H02K 15/16, H02K 15/12

(54) **LÜFTERRAD, KÜCHENMASCHINE UND HERSTELLUNGSVERFAHREN**

(71) Anmelder: Vorwerk & Co. Interholding GmbH, 42275 Wuppertal (DE)
(72) Erfinder: SCHEUCH, Andreas, 58636 Iserlohn (DE); SMYCZEK, Gregor, 45549 Sprockhövel (DE)
(74) Vertreter: Von Rohr Patentanwälte Partnerschaft mbB

(57) **Zusammenfassung**

Es wird ein Lüfterrad für einen Elektromotor, insbesondere einer Küchenmaschine, vorgeschlagen, wobei das Lüfterrad eine Wuchtmarkierung aufweist, die dazu ausgebildet ist, eine Detektion einer Position und/oder Bewegung des Lüfterrads bei einem Auswuchten des Elektromotors zu ermöglichen. Gemäß einem ersten Aspekt der Erfindung ist die Wuchtmarkierung durch eine Durchbrechung, Erhebung oder Vertiefung des Lüfterrads gebildet und weist das Lüfterrad einen integrierten Massenausgleich zum Ausgleichen einer durch die Wuchtmarkierung erzeugten Unwucht auf. Gemäß einem weiteren Aspekt der Erfindung ist das Lüfterrad einschließlich der Wuchtmarkierung durch Spritzgießen hergestellt.

Des Weiteren wird ein Verfahren zum Herstellen eines Lüfterrads für einen Elektromotor vorgeschlagen, wobei das Lüfterrad mit einer Wuchtmarkierung versehen wird und wobei das Lüfterrad spritzgegossen und die Wuchtmarkierung beim Spritzgie-βen des Lüfterrads erzeugt wird.

## Beschreibung

Die vorliegende Erfindung betrifft ein Lüfterrad für einen Elektromotor nach dem Oberbegriff des Anspruchs 1, eine Küchenmaschine mit einem Elektromotor und ein Herstellungsverfahren nach dem Oberbegriff des Anspruchs 14.

Aus dem Stand der Technik sind Elektromotoren sowie Küchenmaschinen mit Elektromotoren bekannt.

Ein Elektromotor weist einen Rotor und einen Stator auf. Vor der Inbetriebnahme eines Elektromotors ist es erforderlich, eine Unwucht des Elektromotors bzw. Rotors zu ermitteln und den Elektromotor bzw. Rotor auszuwuchten.

Zur Ermittlung der Unwucht eines Rotors muss dieser für eine gewisse Zeit auf einer konstanten Drehzahl gehalten werden, was mit einer Wuchtmaschine erfolgt. Hierzu wird eine Wuchtmarkierung benötigt, anhand der mittels eines Drehzahlsensors die Drehzahl detektiert wird. Mittels der detektierten Drehzahl wird ein Antrieb, über den der Rotor rotiert wird, so gesteuert, dass der Rotor mit der gewünschten Drehzahl rotiert. Darüber hinaus wird die Wuchtmarkierung verwendet, um den Rotor für den eigentlichen Wuchtvorgang richtig zu positionieren.

Bei aus dem Stand der Technik bekannten Verfahren wird beispielsweise ein Lüfterrad des Elektromotors bzw. Rotors mit einer Wuchtmarkierung versehen. Dazu ist es bekannt, im Anschluss an einen Spitzgussprozess, bei dem das Lüfterrad hergestellt wird, die Wuchtmarkierung durch Markierungsverfahren, wie Inkjetbedruckung, Laserbeschriftung oder das Tampoprintverfahren, einzubringen. Ferner ist es bekannt, einen Teil bzw. ein Merkmal des Lüfterrads für die Drehzahldetektion zu verwenden, beispielsweise eine Lüfterschaufel.

Diese Vorgehensweisen haben verschiedene Nachteile.

Beim nachträglichen Auftrag der Wuchtmarkierung sind einerseits zusätzliche Fertigungsprozesse und die damit verbundenen Anlagen auszulegen bzw. zu erwerben. Neben den hohen Anschaffungskosten kann die Markierungsqualität andererseits in Abhängigkeit unterschiedlicher Materialchargen und Prozesseinstellungen stark schwanken. Es kann auch passieren, dass die Wuchtmarkierung an einer falschen Stelle aufgebracht wird, was zu kostenintensiven Nacharbeiten oder im schlimmsten Fall zum Ausschuss der Teile führt.

Die Nutzung von bereits auf dem Rotor vorhandenen Merkmalen als Wuchtmarkierung, beispielsweise einer Lüfterschaufel, hat in der Regel den Nachteil, dass mehrere solcher Merkmale gleichmäßig über dem Umfang verteilt sind, um keine unnötig hohe Unwucht beim Rotor zu erzeugen. Es sind daher mehrere Positionen für die Wuchtmarkierung möglich und die Wuchtmaschine muss eines der Merkmale, beispielsweise eine bestimmte Lüfterschaufel, zufällig als Wuchtmarkierung definieren, was die Wuchtfähigkeit der Teile beeinflussen kann. Gleichzeitig muss innerhalb der Maschine immer sichergestellt sein, dass die einmal definierte Position der Wuchtmarkierung beim mehrfachen Handling nicht verloren geht. Zudem kann es passieren, dass sich das Messsystem der Wuchtmaschine während der Rotation des Rotors "verzählt" oder der Rotor an der falschen Stelle abgebremst wird, wodurch die definierte Position ebenfalls verloren geht und ein Auswuchten unmöglich wird. Auch diese Teile müssen anschließend in die Nacharbeit oder können überhaupt nicht mehr gewuchtet werden, so dass sie entsorgt werden müssen.

Der vorliegenden Erfindung liegt deshalb die Aufgabe zugrunde, eine Lösung anzugeben, durch die ein Auswuchten eines Rotors bzw. Elektromotors, insbesondere einer Küchenmaschine, vereinfacht und/oder effizienter, kostengünstiger und/oder fehlerunanfälliger gestaltet wird.

Die der Erfindung zugrundeliegende Aufgabe wird durch ein Lüfterrad gemäß Anspruch 1, eine Küchenmaschine gemäß Anspruch 13 oder ein Verfahren gemäß Anspruch 14 gelöst. Vorteilhafte Weiterbildungen sind Gegenstand der Unteransprüche.

Das erfindungsgemäße Lüfterrad ist vorzugsweise zur Verwendung in einem Elektromotor, insbesondere einem Elektromotor für eine Küchenmaschine, ausgebildet. Das Lüfterrad weist eine Wuchtmarkierung auf, die dazu ausgebildet ist, eine Detektion einer Position und/oder Bewegung des Lüfterrads bei einem Auswuchten des Elektromotors zu ermöglichen.

Gemäß einem ersten Aspekt der vorliegenden Erfindung ist die Wuchtmarkierung durch eine Durchbrechung, Erhebung oder Vertiefung des Lüfterrads gebildet und weist das Lüfterrad einen integrierten Massenausgleich zum Ausgleichen einer durch die Wuchtmarkierung erzeugten Unwucht auf. Hierdurch ist die Position der Wuchtmarkierung eindeutig definiert und eine zuverlässige Erkennung der Wuchtmarkierung beim Auswuchten sichergestellt. Gleichzeitig ist das Lüfterrad möglichst unwuchtfrei bzw. wird eine zusätzliche Unwucht durch die Wuchtmarkierung vermieden.

Gemäß einem weiteren, auch unabhängig realisierbaren Aspekt ist das Lüfterrad einschließlich der Wuchtmarkierung durch Spritzgießen hergestellt. Auf diese Weise kann die Wuchtmarkierung direkt beim Herstellungsprozess des Lüfterrads in dieses integriert werden, sodass ein nachträgliches Erzeugen der Wuchtmarkierung entfällt. Hieraus resultieren entsprechende Vorteile, insbesondere eine Verbesserung der Zuverlässigkeit und/oder Effizienz und/oder eine Verringerung der Kosten und/oder des Ausschusses beim Auswuchten und/oder beim Herstellen des Lüfterrads bzw. Elektromotors bzw. der Küchenmaschine.

Insbesondere ist das Lüfterrad einschließlich des Massenausgleichs durch Spritzgießen hergestellt bzw. wird zusätzlich zu der Wuchtmarkierung auch der Massenausgleich direkt beim Herstellungsprozess des Lüfterrads in dieses integriert. Dies ist einem unwuchtfreien Lüfterrad mit einer zuverlässigen Wuchtmarkierung zuträglich. Des Weiteren entfällt ein nachträgliches Ausgleichen einer durch die Wuchtmarkierung erzeugten Unwucht, was in entsprechenden Vorteilen resultiert.

Vorzugsweise weist das Lüfterrad genau eine Wuchtmarkierung auf. Dies ist einer Fehlerminimierung bei der Erkennung der Position und/oder Bewegung des Lüfterrads beim Auswuchten zuträglich.

Es ist bevorzugt, dass die Wuchtmarkierung sich zumindest im Wesentlichen radial erstreckt und/oder länglich ausgebildet ist und/oder zumindest im Wesentlichen rechteckig ist. Dies ist einer zuverlässigen Erkennung der Wuchtmarkierung beim Auswuchten zuträglich.

Der integrierte Massenausgleich ist vorzugsweise in der Nähe, insbesondere in unmittelbarer Nähe, der Wuchtmarkierung und/oder auf gegenüberliegenden Seiten der Wuchtmarkierung angeordnet. Hierdurch kann die durch die Wuchtmarkierung erzeugte Unwucht besonders gut ausgeglichen werden bzw. wirken sich Fertigungstoleranzen weniger stark aus, sodass durch Fertigungstoleranzen bedingte Unwuchten minimiert werden.

Der integrierte Massenausgleich ist vorzugsweise durch eine Materialverstärkung, Materialschwächung oder Durchbrechung des Lüfterrads gebildet. Auf diese Weise ist der Massenausgleich (fast) unsichtbar und beeinträchtigt die eigentliche Funktion des Lüfterrads nicht.

Das Lüfterrad weist vorzugsweise einen Grundkörper und mehrere auf dem Grundkörper angeordnete Schaufeln auf, vorzugsweise wobei der Grundkörper die Wuchtmarkierung aufweist und/oder die Wuchtmarkierung zwischen zwei der Schaufeln angeordnet ist. Dies ist einer zuverlässigen Erkennung der Wuchtmarkierung beim Auswuchten zuträglich und ermöglicht bzw. vereinfacht einen Massenausgleich ohne Beeinträchtigung der eigentlichen Funktion des Lüfterrads.

Bevorzugt ist der Grundkörper ringförmig und/oder erstreckt sich der Grundkörper in einer zu einer Rotationsachse des Lüfterrads radialen Ebene.

Vorzugsweise ist mindestens die Hälfte der Schaufeln baugleich und ist der integrierte Massenausgleich dadurch gebildet, dass mindestens eine der Schaufeln, bevorzugt mindestens zwei und/oder höchstens vier der Schaufeln, gegenüber den baugleichen Schaufeln eine Materialverstärkung oder Materialschwächung aufweist/aufweisen. Durch die Integration des Massenausgleichs in eine oder mehrere Schaufeln des Lüfterrads ist der Massenausgleich (fast) unsichtbar und beeinträchtigt die eigentliche Funktion des Lüfterrads nicht. Zudem sind gegenüber einer Ausgestaltung des Bauteils ohne Wuchtmarkierung und zugehörigen Massenausgleich nur sehr geringe Änderungen in der Konstruktion des Lüfterrads nötig.

Weiter ist es bevorzugt, dass eine oder mehrere direkt neben der Wuchtmarkierung angeordnete Schaufeln den integrierten Massenausgleich aufweisen. Hierdurch können die Auswirkungen von Fertigungstoleranzen bzw. durch Fertigungstoleranzen bedingte Unwuchten besonders einfach minimiert werden.

Die Wuchtmarkierung erzeugt vorzugsweise eine Unwucht von mehr als 0,5 gmm und/oder weniger als 2 gmm, insbesondere etwa 1 gmm. Diese geringe Unwucht kann gut durch einen entsprechenden Massenausgleich ausgeglichen werden, insbesondere wobei der Massenausgleich so gestaltet werden kann, dass er (fast) unsichtbar ist und/oder die Funktion des Lüfterrads nicht beeinträchtigt.

Vorzugsweise besteht das Lüfterrad aus Kunststoff und/oder ist das Lüfterrad ein Spritzgussbauteil, insbesondere wobei die Wuchtmarkierung und/oder der integrierte Massenausgleich beim Spritzgießen des Lüfterrads erzeugt bzw. in das Lüfterrad integriert wird/werden. Dies ermöglicht ein einfaches und kostengünstiges Erzeugen der Wuchtmarkierung und insbesondere eine gleichzeitige Erzeugung des Massenausgleichs auf einfache, effiziente und/oder kostengünstige Weise.

Ein weiterer Aspekt der vorliegenden Erfindung betrifft eine Küchenmaschine mit einem Elektromotor, der das hierin beschriebene Lüfterrad aufweist. Insbesondere weist der Elektromotor einen Stator und einen relativ zu dem Stator um eine Rotationsachse drehbaren Rotor auf, wobei der Rotor das Lüfterrad aufweist. Vorzugsweise weist die Küchenmaschine einen Rührer auf und ist der Elektromotor zum Antrieb des Rührers ausgebildet. Durch die Küchenmaschine werden entsprechende Vorteile des Lüfterrads erreicht.

Ein weiterer, auch unabhängig realisierbarer Aspekt der vorliegenden Erfindung betrifft ein Verfahren zum Herstellen eines Lüfterrads für einen Elektromotor, insbesondere für eine Küchenmaschine. Das Lüfterrad, der Elektromotor und/oder die Küchenmaschine sind vorzugsweise wie hierin beschrieben ausgebildet.

Bei dem erfindungsgemäßen Verfahren wird das Lüfterrad mit einer Wuchtmarkierung versehen, die dazu ausgebildet ist, eine Detektion einer Position und/oder Bewegung des Lüfterrads bei einem Auswuchten des Elektromotors zu ermöglichen.

Erfindungsgemäß wird das Lüfterrad spritzgegossen, wobei die Wuchtmarkierung ebenfalls beim Spritzgießen des Lüfterrads erzeugt wird.

Vorzugsweise wird beim Spritzgießen des Lüfterrads ein integrierter Massenausgleich zum Ausgleichen einer durch die Wuchtmarkierung erzeugten Unwucht erzeugt.

Durch das bzw. beim Spritzgießen kann die Wuchtmarkierung und vorzugsweise der Massenausgleich direkt beim Herstellungsprozess des Lüfterrads in dieses integriert werden, sodass ein nachträgliches Aufbringen der Wuchtmarkierung und/oder ein nachträgliches Ausgleichen einer durch die Wuchtmarkierung erzeugten Unwucht entfällt. Hieraus resultieren entsprechende Vorteile, insbesondere eine Verbesserung der Zuverlässigkeit und/oder Effizienz und/oder eine Verringerung der Kosten und/oder des Ausschusses beim Auswuchten und/oder beim Herstellen des Lüfterrads bzw. Elektromotors bzw. der Küchenmaschine.

Die vorgenannten Aspekte, Merkmale und Verfahrensschritte der vorliegenden Erfindung sowie die sich aus den Ansprüchen und der nachfolgenden Beschreibung ergebenen Aspekte, Merkmale und Verfahrensschritte der vorliegenden Erfindung können grundsätzlich unabhängig voneinander, aber auch in beliebiger Kombination bzw. Reihenfolge realisiert werden.

Weitere Aspekte, Vorteile, Merkmale und Eigenschaften der vorliegenden Erfindung ergeben sich aus den Ansprüchen und der nachfolgenden Beschreibung einer bevorzugten Ausführungsform anhand der Figuren. Es zeigt:
- Fig. 1: eine perspektivische Darstellung eines Elektromotors mit einem vorschlagsgemäßen Lüfterrad;
- Fig. 2: eine Explosionsdarstellung eines Stators des Elektromotors gemäß Fig. 1;
- Fig. 3: eine perspektivische Darstellung eines Rotors des Elektromotors gemäß Fig. 1;
- Fig. 4: eine Draufsicht eines vorschlagsgemäßen Lüfterrads;
- Fig. 5: eine perspektivische Darstellung des vorschlagsgemäßen Lüfterrads;
- Fig. 6: einen vergrößerten Ausschnitt aus Fig. 4, der eine Wuchtmarkierung und einen Massenausgleich des Lüfterrads zeigt; und
- Fig. 7: eine schematische Darstellung einer vorschlagsgemäßen Küchenmaschine mit einem Elektromotor.

In den teilweise nicht maßstabsgerechten, nur schematischen Figuren werden für gleiche, gleichartige oder ähnliche Bauteile und Komponenten dieselben Bezugszeichen verwendet, wobei entsprechende oder vergleichbare Eigenschaften oder Vorteile erreicht werden können, auch wenn von einer wiederholten Beschreibung abgesehen wird.

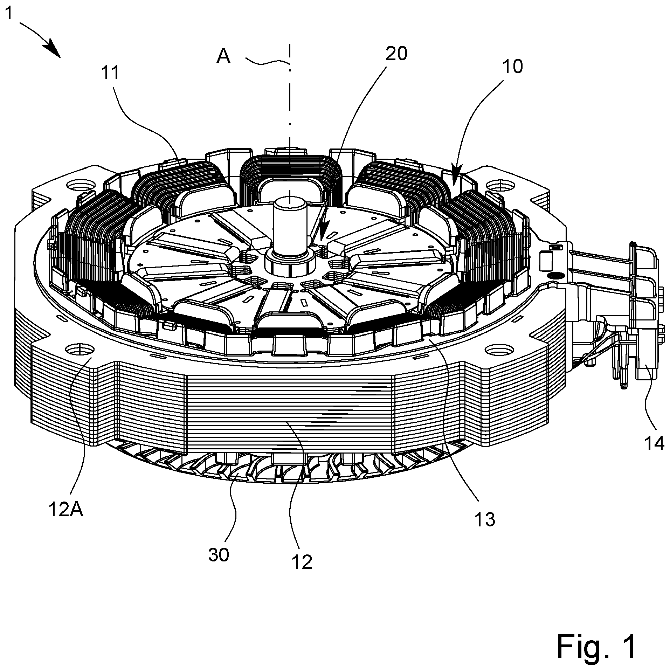

Fig. 1 zeigt einen Elektromotor 1 in einer schematischen, perspektivischen Darstellung.

Bei der dargestellten Ausführungsform ist der Elektromotor 1 als bürstenloser Gleichstrommotor (BLDC-Motor) ausgebildet. Es sind jedoch grundsätzlich auch andere Lösungen möglich. Insbesondere könnte der Elektromotor 1 auch als Reluktanzmotor, insbesondere geschalteter Reluktanzmotor (SR-Motor), ausgebildet sein.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, und/oder ist die maximale Drehzahl größer als 2000, 5000 oder 8000 U/min, insbesondere größer oder gleich 10.000 U/min.

Der Elektromotor 1 weist einen (feststehenden) Stator 10 und einen (rotierenden/rotierbaren) Rotor 20 auf, wobei der Rotor 20 um eine Rotationsachse A relativ zum Stator 10 drehbar ist.

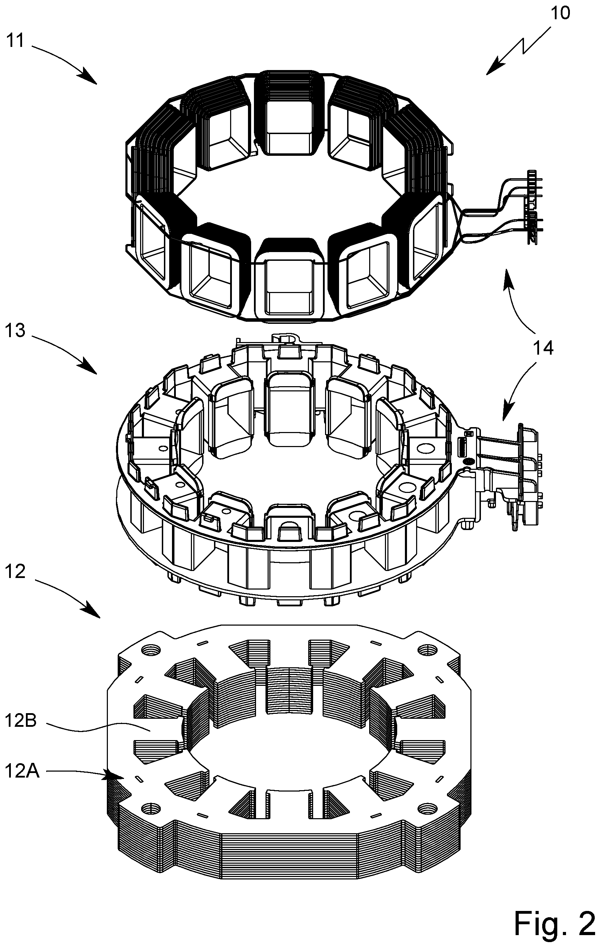

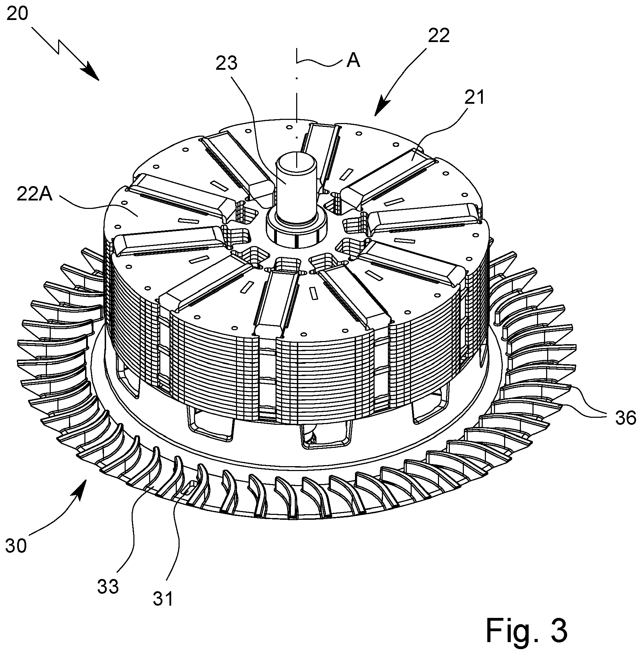

Der Stator 10 und Rotor 20 sind in Fig. 2 und 3 näher dargestellt.

Die räumlichen Zuordnungen, Anordnungen und/oder Ausrichtungen, insbesondere die im Rahmen der vorliegenden Erfindung verwendeten Begriffe "radial", "axial" und/oder "in Umfangsrichtung", beziehen sich - sofern nicht anders angegeben - insbesondere auf die Rotationsachse A des Rotors 20.

Optional kann der Elektromotor 1 ein Gehäuse aufweisen bzw. können Stator 10 und/oder Rotor 20 in einem Gehäuse angeordnet sein (nicht dargestellt).

Beim Darstellungsbeispiel ist der Elektromotor 1 als Innenläufer-Motor ausgebildet bzw. ist der Rotor 20 zumindest teilweise innerhalb des Stators 10 angeordnet. Prinzipiell ist es jedoch auch möglich, den vorschlagsgemäßen Elektromotor 1 als Außenläufer-Motor auszubilden (nicht dargestellt).

Der Stator 10 weist mehrere, hier zwölf, Wicklungen/Spulen 11, einen Statorkern 12, einen Spulenträger 13 und/oder eine Anschlusseinrichtung 14 auf.

Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet.

Der Statorkern 12 bzw. die Statorbleche 12A bildet/bilden vorzugsweise mehrere, hier zwölf, Statorzähne bzw. Spulenabschnitte 12B, wobei jede Wicklung/Spule 11 um einen Spulenabschnitt/Statorzahn 12B gewickelt ist und/oder sich jeweils ein Spulenabschnitt/Statorzahn 12B durch eine Spule 11 hindurch erstreckt.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 mit Strom versorgt werden.

Beim Darstellungsbeispiel weist der Rotor 20 vorzugsweise mehrere, hier zehn, Permanentmagnete 21, einen Rotorkern 22, eine Welle 23 und/oder ein Lüfterrad 30 auf.

Die Permanentmagnete 21 sind vorzugsweise im Rotorkern 22 angeordnet bzw. eingebettet.

Die Permanentmagnete 21 sind vorzugweise sternförmig im Rotor 20 bzw. Rotorkern 22 und/oder um die Welle 23 bzw. Rotationsachse A herum angeordnet und/oder erstrecken sich bzw. haben eine Haupt-/Längserstreckung - bezogen auf die Welle 23 bzw. Rotationsachse A - in radialer Richtung.

Die Permanentmagnete 21 sind vorzugsweise gleichmäßig über einen Kreisumfang verteilt. Benachbarte Permanentmagneten 21 schließen also vorzugsweise einen Winkel von 360° geteilt durch die Anzahl der Permanentmagnete 21 ein.

Grundsätzlich können die Permanentmagnete 21 auch anders als im Darstellungsbeispiel geformt und/oder angeordnet sein, beispielsweise mit einer Längserstreckung in Umfangsrichtung oder senkrecht/tangential zur radialen Richtung.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden.

Vorzugsweise umfasst der Rotorkern 22 mehrere gestapelte Elektrobleche bzw. Rotorbleche 22A oder ist daraus gebildet.

Das Lüfterrad 30 ist vorzugsweise an der Welle 23 befestigt, insbesondere kraft-, form- und/oder stoffschlüssig. Zusätzlich oder alternativ kann das Lüfterrad 30 an dem Rotorkern 22 befestigt sein, insbesondere kraft-, form- und/oder stoffschlüssig. Auch ist es möglich, dass das Lüfterrad 30 an den Rotorkern 22 und/oder die Welle 23 angespritzt ist.

Das Lüfterrad 30 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert das Lüfterrad 30 bei Betrieb des Elektromotors 1 um die Rotationsachse A und kann so entsprechend Luft fördern.

Der dargestellte und beschriebene Rotor 20 ist nur beispielhaft. Insbesondere kann der Elektromotor 1 auch als (geschalteter) Reluktanzmotor ausgebildet sein, wie eingangs erwähnt. Der Rotor 20 ist dann entsprechend ausgebildet und weist bei einem Reluktanzmotor beispielsweise keine Permanentmagneten auf.

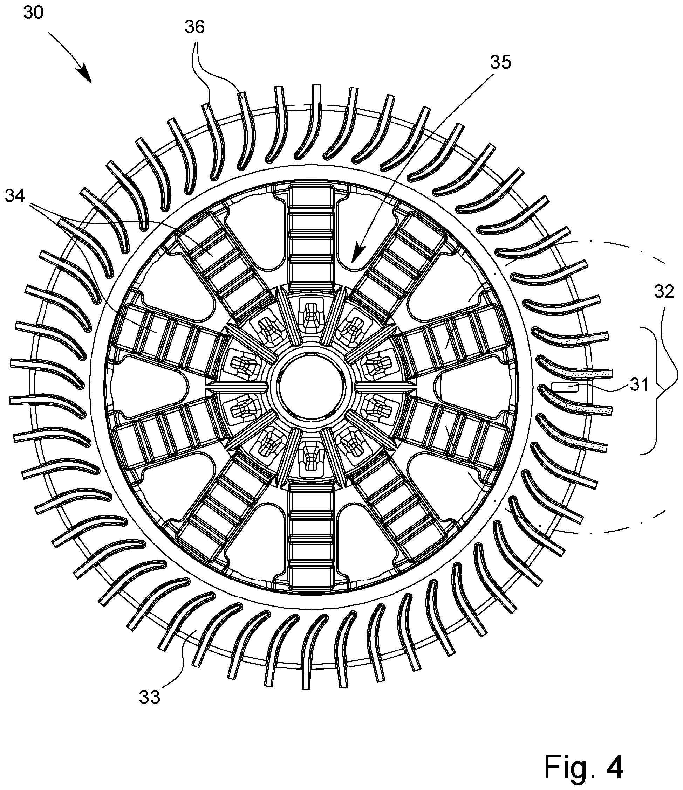

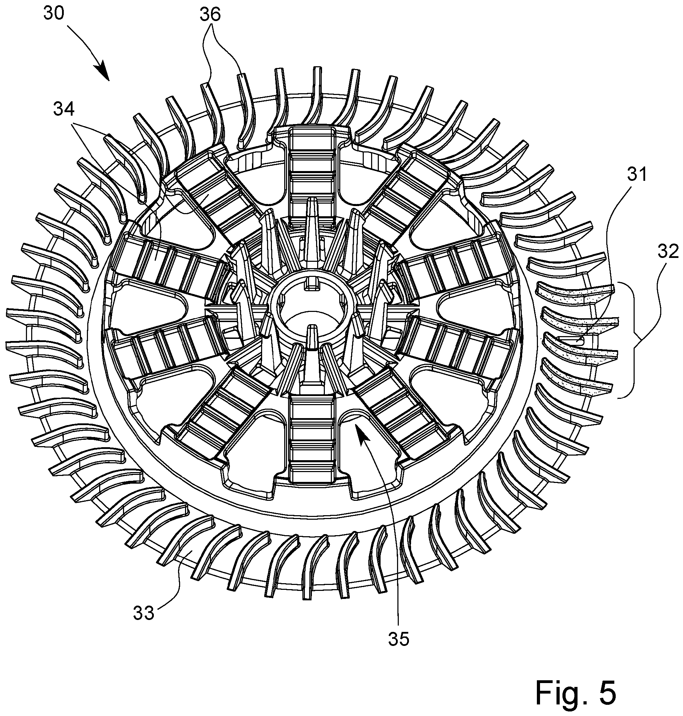

Das vorschlagsgemäße Lüfterrad 30 ist in den Figuren 4, 5 und 6 in verschiedenen Ansichten näher dargestellt.

Insbesondere stellt das Lüfterrad 30 einen separaten Aspekt der vorliegenden Erfindung dar, der auch unabhängig von dem Elektromotor 1 bzw. in Alleinstellung realisierbar ist.

Das Lüfterrad 30 weist vorzugsweise eine Rotationsachse, zentrale Achse und/oder Symmetrieachse auf, die insbesondere mit der Rotationsachse A des Rotors 20 identisch ist. Nachfolgend wird daher die Bezeichnung "Rotationsachse A" auch für die Rotationsachse, zentrale Achse und/oder Symmetrieachse des Lüfterrads 30 verwendet.

Das Lüfterrad 30 weist erfindungsgemäß eine Wuchtmarkierung 31 auf.

Die Wuchtmarkierung 31 ist insbesondere zum Markieren einer Position bzw. Drehlage des Lüfterrads 30 ausgebildet. Insbesondere ist die Wuchtmarkierung 31 als Markierung für einen Wuchtprozess ausgebildet bzw. dazu ausgebildet, bei einem Auswuchten des Rotors 20 bzw. Elektromotors 1 eine vorzugsweise optische Detektion einer Position und/oder Bewegung, insbesondere einer Drehzahl, des Lüfterrads 30 bzw. Rotors 20 zu ermöglichen.

Im Darstellungsbeispiel ist die Wuchtmarkierung 31 durch eine Materialaussparung bzw. eine Durchbrechung des Lüfterrads 30 gebildet. Mit anderen Worten ist im Darstellungsbeispiel die Wuchtmarkierung 31 durch ein (durchgängiges) Loch in dem Lüfterrad 30 gebildet.

Es sind jedoch auch andere Lösungen möglich. Insbesondere kann die Wuchtmarkierung 31 durch eine Vertiefung oder Erhebung im Lüfterrad 30 gebildet sein (nicht dargestellt).

Die Vertiefung kann beispielsweise durch eine Materialschwächung bzw. einen Bereich des Lüfterrads 30, in dem das Lüfterrad 30 eine dünnere Materialstärke als in der Umgebung des Bereichs aufweist, gebildet sein. Es ist jedoch auch möglich, dass das Lüfterrad einen Bereich aufweist, in dem das Material gegenüber einer Umgebung des Bereichs verformt ist, sodass hierdurch die Vertiefung gebildet ist.

Die Erhebung kann beispielsweise durch eine Materialstärkung bzw. einen Bereich des Lüfterrads 30, in dem das Lüfterrad 30 eine dickere Materialstärke als in der Umgebung des Bereichs aufweist, gebildet sein. Es ist jedoch auch möglich, dass das Lüfterrad einen Bereich aufweist, in dem das Material gegenüber einer Umgebung des Bereichs verformt ist, sodass hierdurch die Erhebung gebildet ist.

Vorzugsweise unterscheidet sich die Wuchtmarkierung 31 sich von anderen Merkmalen bzw. Bestandteilen des Lüfterrads 30, insbesondere anderen Durchbrechungen, Erhebungen und/oder Vertiefungen, zum Beispiel indem die Wuchtmarkierung 31 eine andere Form, Größe und/oder Position, insbesondere einen anderen Abstand von der Rotationsachse A, aufweist als andere Merkmale/Bestandteile des Lüfterrads 30.

Die Wuchtmarkierung 31 ist vorzugsweise ein eineindeutiges Merkmal des Lüfterrads 30 und/oder erfüllt außer der Markierungsfunktion für das Auswuchten keine weiteren Funktionen.

Das Lüfterrad 30 weist vorzugsweise einen (integrierten) Massenausgleich 32 zum Ausgleichen einer durch die Wuchtmarkierung 31 erzeugten Unwucht auf. Durch den Massenausgleich 32 wird vorzugsweise eine Unwucht erzeugt, die der durch die Wuchtmarkierung 31 erzeugten Unwucht genau entgegengesetzt ist, sodass die Unwuchten sich (zumindest im Wesentlichen) ausgleichen. Mit anderen Worten ist der Massenausgleich 32 vorzugsweise so ausgebildet, dass sich bei einer Rotation des Lüfterrads 30 die Fliehkräfte der Wuchtmarkierung 31 und die Fliehkräfte des Massenausgleichs 32 zumindest im Wesentlichen kompensieren.

Der Massenausgleich 32 ist also insbesondere eine zusätzliche Masse, die dazu vorgesehen ist, die durch Einbringen der Wuchtmarkierung 31 in das Lüfterrad 30 erzeugte Unwucht auszugleichen. Die "zusätzliche Masse" des Massenausgleichs 32 kann dabei - je nach Ausbildung und Anordnung der Wuchtmarkierung 31 und des Massenausgleichs 32 - auch eine negative bzw. verringerte Masse sein (beispielseiweise eine Materialschwächung).

Der Massenausgleich 32 ist insbesondere in das Lüfterrad 30 integriert. Bevorzugt erfolgt die Integration des Massenausgleichs 32 in das Lüfterrad 30 durch ein entsprechendes Design des Lüfterrads 30. Das Lüfterrad 30 ist vorzugsweise also so gestaltet, dass die durch die Wuchtmarkierung 31 erzeugte Unwucht durch eine entsprechende Anpassung des Designs bzw. der Ausgestaltung des Lüfterrads 30, insbesondere eine Anpassung der Materialstärke bzw. -menge, in einem anderen Bereich ausgeglichen wird.

Das Lüfterrad 30 ist vorzugsweise zumindest im Wesentlichen unwuchtfrei ausgebildet.

Vorzugsweise besteht das Lüfterrad 30 aus Kunststoff.

Insbesondere ist bzw. wird das Lüfterrad 30 durch Spritzgießen hergestellt.

Die Wuchtmarkierung 31 und/oder der Massenausgleich 32 sind bzw. werden vorzugsweise ebenfalls durch Spritzgießen hergestellt bzw. werden beim Spritzgießen des Lüfterrads 30 erzeugt. Auf diese Weise können die Wuchtmarkierung 31 und/oder der Massenausgleich 32 direkt beim Herstellungsprozess des Lüfterrads 30 erzeugt bzw. in das Lüfterrad 30 eingebracht bzw. integriert werden, sodass ein nachträgliches Erzeugen bzw. Anbringen einer Wuchtmarkierung entfällt und entsprechende Vorteile erreicht werden.

Das Lüfterrad 30 ist vorzugsweise also ein Spritzgussbauteil, wobei die Wuchtmarkierung 31 und/oder der Massenausgleich 32 in das Spritzgussbauteil integriert ist/sind bzw. gemeinsam mit dem Spritzgussbauteil erzeugt bzw. spritzgegossen sind/werden.

Vorzugsweise ist eine zum Herstellen bzw. Spritzgießen des Lüfterrads 30 verwendete Spritzgussform so ausgebildet, dass das mittels der Spritzgussform hergestellte Lüfterrad 30 die Wuchtmarkierung 31 und vorzugsweise den Massenausgleich 32 aufweist.

Insbesondere ist/wird das Lüfterrad 30 nicht nachträglich oder in einem vom Herstellungsprozess, insbesondere Spritzgussprozess, des Lüfterrads 30 separaten Schritt mit der Wuchtmarkierung 31 versehen.

Das Verfahren zum Herstellen des Lüfterrads 30, bei dem das Lüfterrad 30 spritzgegossen wird und beim Spritzgießen die Wuchtmarkierung 31 und vorzugsweise der Massenausgleich 32 erzeugt werden, stellt einen unabhängigen Aspekt der vorliegenden Erfindung dar.

Vorzugsweise weist das Lüfterrad 30 genau eine Wuchtmarkierung 31 auf. Dies ermöglicht bzw. erleichtert eine eindeutige Markierung und ist somit vorteilhaft für eine Zuverlässige Detektion beim Auswuchten.

Grundsätzlich können jedoch auch mehrere Wuchtmarkierungen 31 vorgesehen sein. Falls mehrere Wuchtmarkierungen 31 vorgesehen sind, sind die Wuchtmarkierungen 31 vorzugsweise asymmetrisch, insbesondere auf verschiedenen Durchmessern in Bezug auf die Rotationsachse A, an dem Lüfterrad 30 angeordnet und/oder unterschiedlich ausgebildet, beispielsweise in dem die Wuchtmarkierungen 31 unterschiedliche Größen, Formen und/oder Positionen, insbesondere unterschiedliche Abstände zur Rotationsachse A, haben. Hierdurch wird eine eindeutige Markierung erreicht.

Die Wuchtmarkierung 31 erstreckt sich vorzugsweise zumindest im Wesentlichen radial. Mit anderen Worten ist die Erstreckung der Wuchtmarkierung 31 in radialer Richtung vorzugsweise größer als in tangentialer Richtung bzw. Umfangsrichtung.

Vorzugsweise ist die Wuchtmarkierung 31 länglich ausgebildet und/oder zumindest im Wesentlichen rechteckig. Dies ist jedoch nicht zwingend.

Die Wuchtmarkierung 31 weist vorzugsweise eine Unwucht von mehr als 0,5 gmm und/oder weniger als 2 gmm, insbesondere etwa 1 gmm, auf oder erzeugt diese. Diese (geringe) Unwucht ist durch einen Massenausgleich einfach zu kompensieren. Insbesondere ermöglicht diese geringe Unwucht einen Massenausgleich, der (fast) unsichtbar bzw. mit dem bloßen Auge kaum oder nicht zu erkennen ist.

Der Massenausgleich 32 ist vorzugsweise in der Nähe der Wuchtmarkierung 31 angeordnet. Eine Anordnung der Massenausgleichs 32 in der Nähe der Wuchtmarkierung 31 ist insbesondere eine Anordnung der Wuchtmarkierung 31 und der Massenausgleichs 32 in einem Sektor bzw. Winkelbereich von weniger als 90°, insbesondere weniger als 60°, besonders bevorzugt weniger als 30°, bezogen auf die Rotationsachse A.

Insbesondere ist der Massenausgleich 32 in unmittelbarer Nähe der Wuchtmarkierung 31 angeordnet. Eine Anordnung in unmittelbarer Nähe der Wuchtmarkierung 31 ist insbesondere eine Anordnung, bei der sich keine funktionalen Elemente wie die nachfolgend näher erläuterten Schaufeln 36 oder ähnliches zwischen der Wuchtmarkierung 31 und dem Massenausgleich 32 befinden.

Der Massenausgleich 32 kann jedoch auch gegenüberliegend der Wuchtmarkierung 31 angeordnet sein. Insbesondere liegen der Massenausgleich 32 und die Wuchtmarkierung 31 also auf einer Geraden, die die Rotationsachse A schneidet.

Der Massenausgleich 32 ist vorzugsweise durch eine Materialverstärkung, Materialschwächung oder Durchbrechung des Lüfterrads gebildet. Die konkrete Ausbildung des Massenausgleichs 32 hängt insbesondere von der Anordnung des Massenausgleichs 32 relativ zur Wuchtmarkierung 31 und von der Ausbildung der Wuchtmarkierung 31 ab.

Das Lüfterrad 30 weist vorzugsweise einen Grundkörper 33 auf. Der Grundkörper 33 ist vorzugsweise ringförmig, radförmig, flächig, scheibenartig und/oder plattenartig ausgebildet. Insbesondere erstreckt sich der Grundkörper 33 vorzugsweise zumindest im Wesentlichen radial zur Rotationsachse A bzw. in einer zur Rotationsachse A radialen Ebene.

Vorzugsweise weist der Grundkörper 33 die Wuchtmarkierung 31 auf bzw. ist die Wuchtmarkierung 31 in den Grundkörper 31 eingebracht. Insbesondere stellt die Wuchtmarkierung 31 eine Durchbrechung bzw. ein Loch in dem Grundkörper 33 dar.

Vorzugsweise ist der Grundkörper 33 über mehrere radiale Streben 34 mit einem zentralen Abschnitt 35, der vorzugsweise innerhalb des Grundkörpers 33, liegt, verbunden. Vorzugsweise ist das Lüfterrad 30 mittels des zentralen Abschnitts 35 mit dem Rotorkern 22 und/oder der Welle 23 verbunden.

Ferner weist das Lüfterrad 30 vorzugsweise mehrere Schaufeln 36 auf, die insbesondere auf dem Grundkörper 33 angeordnet sind. Die Schaufeln 36 können sich zumindest abschnittsweise radial erstrecken. Im Darstellungsbeispiel sind die Schaufeln 36 gekrümmt, insbesondere wobei die Schaufeln 36 einen radialen Abschnitt und einen gekrümmten Abschnitt aufweisen.

Die Schaufeln 36 sind zum Transport von Luft bei Rotation des Lüfterrads 30 ausgebildet.

Vorzugweise ist mindestens die Hälfte der Schaufeln 36 baugleich bzw. identisch ausgebildet.

Weiter vorzugsweise ist die Wuchtmarkierung 31 zwischen den Schaufeln 36 bzw. zwei der Schaufeln 36 angeordnet.

Vorzugsweise weisen eine oder mehrere Schaufeln 36 den Massenausgleich 32 auf oder bilden diesen. Die Schaufeln 36, die den Massenausgleich 32 aufweisen oder bilden, haben insbesondere eine andere Masse als die übrigen oder baugleichen Schaufeln 36.

Insbesondere unterscheiden sich die Schaufeln 36, die den Massenausgleich 32 aufweisen oder bilden, also von den übrigen oder baugleichen Schaufeln 36.

Die Anzahl der Schaufeln 36, die den Massenausgleich 32 aufweisen oder bilden, kann insbesondere 1, 2, 3, 4, 5, 6, 7, 8, 9, 10, 11, 12, 13 oder 14 betragen.

Der integrierte Massenausgleich 32 ist vorzugsweise durch eine Materialverstärkung oder Materialschwächung von einer oder mehreren der Schaufeln 36 gebildet.

Grundsätzlich ist es jedoch auch möglich, dass der integrierte Massenausgleich 32 durch eine Materialverstärkung oder Materialschwächung des Grundkörpers 33 oder eines anderen Teils des Lüfterrads 30 gebildet ist.

Unter einer Materialverstärkung ist insbesondere zu verstehen, dass in einem begrenzten Bereich mehr bzw. zusätzliches Material verwendet wird, insbesondere wobei die Verwendung von mehr/zusätzlichem Material zum Ausgleichen der durch die Wuchtmarkierung 31 erzeugten Unwucht dient. Eine Materialverstärkung einer bestimmten Schaufel 36 ist dementsprechend vorzugsweise dadurch gebildet, dass die Schaufel 36 mehr Material bzw. ein größeres Volumen aufweist als die anderen bzw. baugleichen Schaufeln 36. Die Schaufel 36 mit der Materialverstärkung kann beispielsweise dicker, höher und/oder länger als die baugleichen Schaufeln 36 sein. Eine Materialverstärkung des Grundkörpers 33 kann beispielsweise dadurch gebildet sein, dass der Grundkörper 33 in einem begrenzten Bereich dicker ist als in der Umgebung des begrenzten Bereichs.

Unter einer Materialschwächung ist entsprechend insbesondere zu verstehen, dass in einem begrenzten Bereich weniger Material verwendet wird, insbesondere wobei die Verwendung von weniger Material zum Ausgleichen der durch die Wuchtmarkierung 31 erzeugten Unwucht dient. Eine Materialschwächung einer bestimmten Schaufel 36 ist dementsprechend vorzugsweise dadurch gebildet, dass die Schaufel 36 weniger Material bzw. ein kleineres Volumen aufweist als die anderen bzw. baugleichen Schaufeln 36. Die Schaufel 36 mit der Materialschwächung kann beispielsweise dünner, flacher und/oder kürzer als die baugleichen Schaufeln 36 sein. Eine Materialschwächung des Grundkörpers 33 kann beispielsweise dadurch gebildet sein, dass der Grundkörper 33 in einem begrenzten Bereich dünner ist als in der Umgebung des begrenzten Bereichs oder eine Durchbrechung aufweist.

In Fig. 4 bis 6 sind die Schaufeln 36, die den Massenausgleich 32 aufweisen bzw. bilden, gepunktet dargestellt. Im Darstellungsbespiel weisen daher die vier am nächsten an der Wuchtmarkierung 31 angeordneten Schaufeln 36 den Massenausgleich 32 auf.

Besonders bevorzugt wird die durch die Wuchtmarkierung 31 erzeugte Unwucht also dadurch ausgeglichen, dass bei einer oder mehreren der Schaufeln 36 etwas mehr oder weniger Material verwendet wird als bei den übrigen bzw. baugleichen Schaufeln 36. Dies erzeugt eine zusätzliche Unwucht, die insbesondere so bemessen ist, dass die durch die Wuchtmarkierung 31 erzeugte Unwucht ausgeglichen wird und das Lüfterrad 30 insbesondere zumindest im Wesentlichen unwuchtfrei ist.

Die Integration des Massenausgleichs 32 in einer oder mehreren Schaufeln 36 kann in dem Spritzgussmodell bzw. der Spritzgussform für das Lüfterrad 30 leicht berücksichtigt werden. Des Weiteren führt die Integration des Massenausgleichs 32 in einer oder mehreren Schaufeln 36 dazu, dass einerseits die Funktion des Lüfterrads 30 durch den Massenausgleich 32 nicht beeinträchtigt wird und andererseits das Massenausgleich 32 (fast) unsichtbar ist bzw. mit dem bloßen Auge kaum oder gar nicht zu erkennen ist.

Besonders bevorzugt weisen die direkt neben bzw. am nächsten an der Wuchtmarkierung 31 angeordneten Schaufeln 36 den Massenausgleich 32 auf oder bilden diesen. Beispielsweise können die zwei oder vier Schaufeln 36, die direkt neben bzw. am nächsten an der Wuchtmarkierung 31 angeordnet sind, den Massenausgleich 32 aufweisen oder bilden. In diesem Fall ist der Massenausgleich 32 vorzugsweise durch eine Materialverstärkung gebildet.

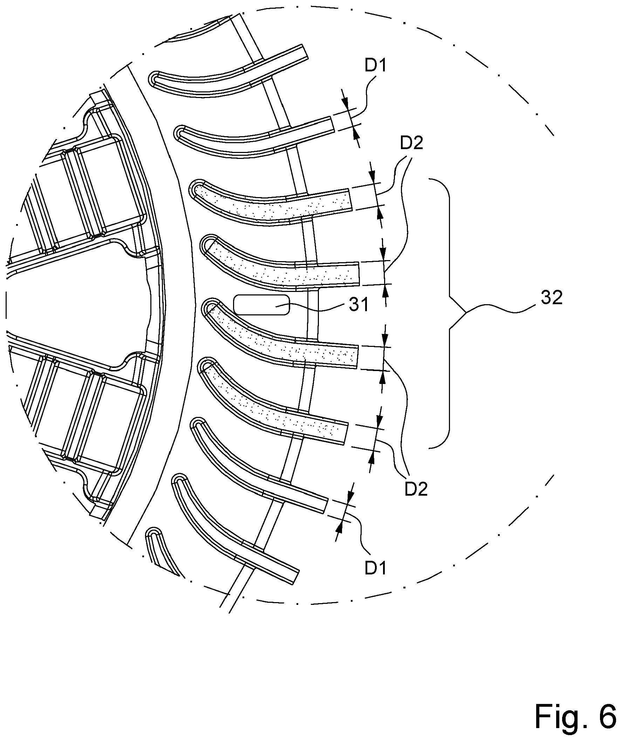

Diese besonders bevorzugte Ausführungsform, bei der die vier direkt neben bzw. am nächsten an der Wuchtmarkierung 31 angeordneten Schaufeln 36 den Massenausgleich 32 aufweisen oder bilden und der Massenausgleich 32 durch eine Materialverstärkung gebildet ist, ist in Fig. 6 näher dargestellt. Die vier Schaufeln 36, die den Massenausgleich 32 aufweisen oder bilden, weisen vorzugsweise jeweils eine Dicke D2 auf, während die übrigen Schaufeln 36 jeweils eine Dicke D1 aufweisen. Die Dicke D2 ist größer als die Dicke D1, wodurch insbesondere der Massenausgleich 32 gebildet ist. Im Darstellungsbeispiel gemäß Fig. 6 ist die Dicke D2 zur Veranschaulichung deutlich größer dargestellt als die Dicke D1, sodass der hierdurch gebildete Massenausgleich 32 gut erkennbar ist. In der Realität ist der Dickenunterschied zwischen der Dicke D1 und der Dicke D2 vorzugsweise (deutlich) geringer als in Fig. 6 dargestellt.

Es ist jedoch auch möglich, dass die Schaufeln 36, die den Massenausgleich 32 aufweisen oder bilden, unterschiedliche Massen und/oder Dicken D2 aufweisen. Mit anderen Worten ist es also möglich, dass mehrere Schaufeln 36 den Massenausgleich 32 aufweisen oder bilden, wobei diese Schaufeln 36 zumindest teilweise unterschiedliche Massen und/oder Dicken D2 aufweisen.

Insbesondere kann die Masse und/oder Dicke D2 der Schaufeln 36, die den Massenausgleich 32 aufweisen oder bilden, von dem Abstand der jeweiligen Schaufel 36 zu der Wuchtmarkierung 31 und/oder der Anzahl der zwischen der jeweiligen Schaufel 36 und der Wuchtmarkierung 31 liegenden Schaufeln 36 abhängen. Besonders bevorzugt nimmt die Masse und/oder Dicke D2 der Schaufeln 36 in Umfangsrichtung und/oder mit zunehmendem Abstand von der Wuchtmarkierung 31 bzw. mit zunehmender Anzahl von zwischen der jeweiligen Schaufel 36 und der Wuchtmarkierung 31 liegenden Schaufeln 36 zu oder ab, insbesondere stetig, kontinuierlich, linear und/oder in gleichen Intervallen. Beispielsweise kann die am nächsten an der Wuchtmarkierung 31 gelegene Schaufel 36 eine bestimmte Dicke D2 aufweisen, während die Dicke D2 der (in Umfangsrichtung) nachfolgenden Schaufeln 36 jeweils um den gleichen Betrag X verringert ist. Somit hat vorzugsweise die am nächsten an der Wuchtmarkierung 31 gelegene Schaufel die Dicke D2, die (in Umfangsrichtung) nachfolgende Schaufel 36 die Dicke D2-1*X, die dann (in Umfangsrichtung) nachfolgende Schaufel 36 die Dicke D2-2*X usw.

Dies gilt vorzugsweise auf beiden Seiten der Wuchtmarkierung 31 bzw. sowohl im Uhrzeigersinn als auch gegen den Uhrzeigersinn, sodass ausgehend von der Wuchtmarkierung 31 die nächste Schaufel 36 im Uhrzeigersinn und die nächste Schaufel 36 gegen den Uhrzeigersinn beide die Dicke D2 aufweisen, die zweitnächste Schaufel 36 im Uhrzeigersinn und die zweitnächste Schaufel 36 gegen den Uhrzeigersinn beide die Dicke D2-1*X aufweisen, die drittnächste Schaufel 36 im Uhrzeigersinn und die drittnächste Schaufel 36 gegen den Uhrzeigersinn beide die Dicke D2-2*X aufweisen usw.

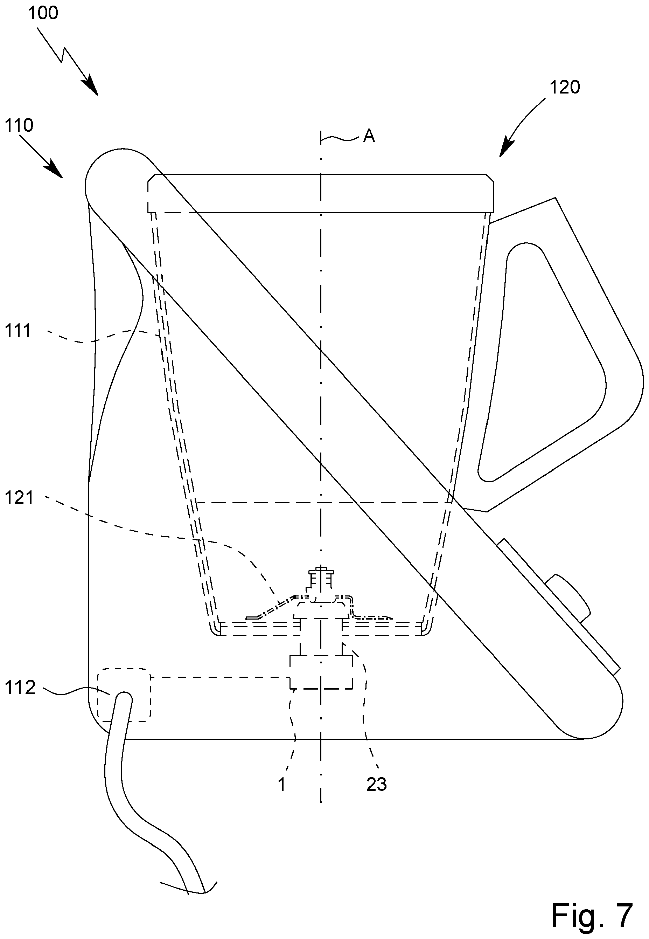

Fig. 7 zeigt schematisch eine vorschlagsgemäße Küchenmaschine 100 zur Zubereitung von Speisen bzw. Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 7 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 23 - optional über einen Wellenaufsatz - mit dem Rührer 121 verbunden oder verbindbar ist und/oder - in der Anschlussposition - von unten formschlüssig in den Boden des Gefäßes 120 eingreift.

Der Elektromotor 1 ist - abweichend von der Darstellung in Fig. 1 - in der Küchenmaschine 100 vorzugsweise derart eingebaut, dass sich das Lüfterrad 30 bei der in Fig. 7 gezeigten üblichen Gebrauchslage der Küchenmaschine 100 oben an dem Elektromotor 1 bzw. oberhalb des Stators 10 und/oder Rotorkerns 22 befindet.

Vorzugsweise entspricht die Rotationsachse A des Elektromotors 1 der Drehachse des Rührers 121 und/oder einer Mittelachse des Gefäßes 120, die mittig durch das Gefäß 120 verläuft, wie in Fig. 7 angedeutet.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 mit elektrischem Strom zu versorgen.

Abhängig von der Drehgeschwindigkeit bzw. Drehzahl des Rührers 121 bzw. Elektromotors 1 ist die Küchenmaschine 100 vorzugsweise sowohl zum Rühren (bei kleinen Drehzahlen) als auch zum Zerkleinern (bei großen Drehzahlen) von Zutaten ausgebildet. Besonders bevorzugt ist auch ein langsames Rühren, beispielsweise mit 10 U/min, und/oder ein sehr feines bzw. definiertes Zerkleinern, beispielsweise mit 10.000 U/min, möglich.

Einzelne Aspekte, Merkmale und/oder Verfahrensschritte der vorliegenden Erfindung können unabhängig, aber auch in beliebiger Kombination und/oder Reihenfolge realisiert werden.

### Bezugszeichenliste

- 1: Elektromotor

- 10: Stator
- 11: Spule
- 12: Statorkern
- 12A: Statorblech
- 12B: Statorzahn/Spulenabschnitt
- 13: Spulenträger
- 14: Anschlusseinrichtung

- 20: Rotor
- 21: Permanentmagnet
- 22: Rotorkern
- 22A: Rotorblech
- 23: Welle

- 30: Lüfterrad
- 31: Wuchtmarkierung
- 32: (integrierter) Massenausgleich
- 33: Grundkörper
- 34: Streben
- 35: zentraler Abschnitt
- 36: Schaufeln

- 100: Küchenmaschine
- 110: Basisstation
- 111: Aufnahme
- 112: Stromversorgung
- 120: Gefäß
- 121: Rührer

- A: Rotationsachse von 20/30
- D1: Dicke
- D2: Dicke

## Patentansprüche

1. Lüfterrad (30) für einen Elektromotor (1), insbesondere für eine Küchenmaschine (100),
wobei das Lüfterrad (30) eine Wuchtmarkierung (31) aufweist, die dazu ausgebildet ist, eine Detektion einer Position und/oder Bewegung des Lüfterrads (30) bei einem Auswuchten des Elektromotors (1) zu ermöglichen,
**dadurch gekennzeichnet,**
**dass** die Wuchtmarkierung (31) durch eine Durchbrechung, Erhebung oder Vertiefung des Lüfterrads (30) gebildet ist und das Lüfterrad (30) einen integrierten Massenausgleich (32) zum Ausgleichen einer durch die Wuchtmarkierung (31) erzeugten Unwucht aufweist, und/oder
**dass** das Lüfterrad (30) einschließlich der Wuchtmarkierung (31) durch Spritzgießen hergestellt ist.

2. Lüfterrad nach Anspruch 1, **dadurch gekennzeichnet, dass** das Lüfterrad (30) einen integrierten Massenausgleich (32) zum Ausgleichen einer durch die Wuchtmarkierung (31) erzeugten Unwucht aufweist, wobei das Lüfterrad (30) einschließlich des integrierten Massenausgleichs (32) durch Spritzgießen hergestellt ist.

3. Lüfterrad nach Anspruch 1 oder 2, **dadurch gekennzeichnet, dass** das Lüfterrad (30) genau eine Wuchtmarkierung (31) aufweist.

4. Lüfterrad nach einem der voranstehenden Ansprüche, **dadurch gekennzeichnet, dass** die Wuchtmarkierung (31) sich zumindest im Wesentlichen radial erstreckt und/oder länglich ausgebildet und/oder zumindest im Wesentlichen rechteckig ist.

5. Lüfterrad nach einem der voranstehenden Ansprüche, **dadurch gekennzeichnet, dass** der integrierte Massenausgleich (32) in vorzugsweise unmittelbarer Nähe der Wuchtmarkierung (31) und/oder auf gegenüberliegenden Seiten der Wuchtmarkierung (31) angeordnet ist.

6. Lüfterrad nach einem der voranstehenden Ansprüche, **dadurch gekennzeichnet, dass** der integrierte Massenausgleich (32) durch eine Materialverstärkung, Materialschwächung oder Durchbrechung des Lüfterrads (30) gebildet ist.

7. Lüfterrad nach einem der voranstehenden Ansprüche, **dadurch gekennzeichnet, dass** das Lüfterrad (30) einen Grundkörper (33) und mehrere auf dem Grundkörper (33) angeordnete Schaufeln (36) aufweist, wobei der Grundkörper (33) die Wuchtmarkierung (31) aufweist und/oder die Wuchtmarkierung (31) zwischen zwei der Schaufeln (36) angeordnet ist.

8. Lüfterrad nach Anspruch 7, **dadurch gekennzeichnet, dass** der Grundkörper (33) ringförmig ist und/oder sich in einer zu einer Rotationsachse (A) des Lüfterrads (30) radialen Ebene erstreckt.

9. Lüfterrad nach Anspruch 7 oder 8, **dadurch gekennzeichnet, dass** mindestens die Hälfte der Schaufeln (36) baugleich ist und der integrierte Massenausgleich (32) dadurch gebildet ist, dass mindestens eine der Schaufeln (36), bevorzugt mindestens zwei und/oder höchstens vier der Schaufeln (36), gegenüber den baugleichen Schaufeln (36) eine Materialverstärkung oder Materialschwächung aufweist bzw. aufweisen.

10. Lüfterrad nach Anspruch 9, **dadurch gekennzeichnet, dass** eine oder mehrere direkt neben der Wuchtmarkierung (31) angeordnete Schaufeln (36) den integrierten Massenausgleich (32) aufweisen.

11. Lüfterrad nach einem der voranstehenden Ansprüche, **dadurch gekennzeichnet, dass** die Wuchtmarkierung (31) eine Unwucht von mehr als 0,5 gmm und/oder weniger als 2 gmm, insbesondere etwa 1 gmm, erzeugt.

12. Lüfterrad nach einem der voranstehenden Ansprüche, **dadurch gekennzeichnet, dass** das Lüfterrad (30) aus Kunststoff besteht und/oder ein Spritzgussbauteil ist.

13. Küchenmaschine (100) mit einem Elektromotor (1), wobei der Elektromotor (1) ein nach einem der voranstehenden Ansprüche ausgebildetes Lüfterrad (30) aufweist, insbesondere wobei die Küchenmaschine (100) einen Rührer (121) aufweist und der Elektromotor (100) zum Antrieb des Rührers (121) ausgebildet ist.

14. Verfahren zum Herstellen eines Lüfterrads (30) für einen Elektromotor (1), insbesondere für eine Küchenmaschine (100),
insbesondere wobei das Lüfterrad (30) nach einem der Ansprüche 1 bis 12 ausgebildet ist und/oder die Küchenmaschine (100) nach Anspruch 13 ausgebildet ist,
wobei das Lüfterrad (30) mit einer Wuchtmarkierung (31) versehen wird, die dazu ausgebildet ist, eine Detektion einer Position und/oder Bewegung des Lüfterrads (30) bei einem Auswuchten des Elektromotors (1) zu ermöglichen,
**dadurch gekennzeichnet,**
**dass** das Lüfterrad (30) spritzgegossen wird und die Wuchtmarkierung (31) beim Spritzgießen des Lüfterrads (30) erzeugt wird.

15. Verfahren nach Anspruch 14, **dadurch gekennzeichnet, dass** beim Spritzgießen des Lüfterrads (30) ein integrierter Massenausgleich (32) zum Ausgleichen einer durch die Wuchtmarkierung (31) erzeugten Unwucht erzeugt wird.
